# EUROPÄISCHE PATENTSCHRIFT

(11) **EP 1 558 527 B1**
(45) Veröffentlichungstag und Bekanntmachung des Hinweises auf die Patenterteilung: **30.05.2007**
(21) Anmeldenummer: 03767397.7
(22) Anmeldetag: 29.10.2003
(51) Int. Cl.: C02F 1/46, C02F 1/461

(54) **VORRICHTUNG ZUR VERHÜTUNG VON WASSERSTEIN IN WASSERFÜHRENDEN SYSTEMEN**
DEVICE FOR PREVENTION OF SCALE IN WATER SUPPLY SYSTEMS
DISPOSITIF PERMETTANT D'EMPECHER L'ENTARTRAGE DANS DES SYSTEMES DE CIRCULATION D'EAU

(30) Priorität: 07.11.2002 DE 20217325 U; 29.11.2002 DE 20218562 U; 04.09.2003 DE 10340655
(43) Veröffentlichungstag der Anmeldung: 03.08.2005
(73) Patentinhaber: CWW Vermögensverwaltungs GmbH, 95111 Rehau (DE)
(72) Erfinder: SCHULZE, Christel, 95100 Selb (DE)
(74) Vertreter: Graf, Helmut
(86) Internationale Anmeldenummer: PCT/DE2003/003586
(87) Internationale Veröffentlichungsnummer: WO 2004/041728

(56) Entgegenhaltungen:
- EP-A- 0 751 096
- EP-A- 1 125 895
- DE-A- 3 838 931
- DE-A- 19 602 369
- DE-U- 8 531 521

## Beschreibung

Die Erfindung bezieht sich auf eine Vorrichtung gemäß Oberbegriff Patentanspruch 1.

In Systemen, insbesondere auch in Brauchwassersystemen, die kalziumcarbonhaltiges Wasser führen, besteht generell das Problem, daß dieses Wasser zur Bildung von Kalksteinablagerungen im System führt, welche Schäden an den wasserführenden Einrichtungen verursachen und/oder deren Gebrauch beeinträchtigen, möglicherweise sogar zur Zerstörung solcher Einrichtungen führt.

Bekannt sind Vorrichtungen zur Verhütung der Bildung von Wasserstein, d. h. Kalkschutzgeräte in Form von Enthärtungsanlagen, die auf lonenaustausch- oder Umkehrosmose basieren.

Weiterhin sind Dosieranlagen bekannt, mit denen dem Wasser kristallisationsinhibierende chemische Stoffe beigemischt werden. Nachteil dieser Vorrichtungen bzw. Verfahren ist aber, daß sie das Wasser nachhaltig chemisch verändern, unter anderem bei mangelhafter Sorgfalt während des Betriebes Folgeprobleme, beispielsweise in Form von Korrosion, Verkeimung und anderen, die Güte bzw. die Verwendung des Wassers beeinträchtigenden Faktoren auftreten können. Im Falle von Trinkwasser besteht darüber hinaus die Gefahr gesundheitlicher Schäden. Weitere Nachteile sind der permanente Einsatz von Chemikalien bei der Dosierung des Wassers oder zur Regeneration der Anlagen sowie der teilweise hohe technische Aufwand, der zum Beispiel bei Umkehr-Osmoseanlagen besteht. Ingesamt wirken sich diese bekannten Vorrichtungen und Verfahren auch nachteilig auf die Umwelt und die schützenswerten Wasserressourcen aus.

Bekannt sind auch Elektrolyseanlagen, die mit Hilfe von internen Elektroden Wasser bzw. wässerige Lösungen von Salzen zersetzen. Diese Anlagen werden allerdings weniger in der Wasseraufbereitung und Wasserbehandlung , sondern bevorzugt in der chemischen Industrie eingesetzt, beispielsweise als Verfahren zur Chlor-Alkali-Elektrolyse von Kochsalzlösungen zur Gewinnung von Natronlauge und Chlor. Die Produktion von Chlor in salzhaltigem Wasser wird auch bei der elektrolytischen Desinfektion von Wasser, z. B. bei Schwimmbädern, ausgenutzt.

Bekannt ist weiterhin auch, daß kalkhaltiges Wasser zur Bildung von Wassersteinablagerungen an Wandungen von wasserführenden Leitungen usw. führt und diese Kalksteinablagerungen erhebliche Schäden an wasserführenden Einrichtungen verursachen, deren Gebrauch beeinträchtigen oder sogar zu deren Zerstörung führen.

Aufgabe der Erfindung ist es, eine Vorrichtung aufzuzeigen, mit der eine Verhütung von Wasserstein in wasserführenden Systemen wirksam erreicht wird, und zwar ohne den Einsatz von chemischen Mitteln. Zur Lösung dieser Aufgabe ist eine Vorrichtung entsprechend dem Patentanspruch ausgebildet.

Der wesentliche Vorteil der Erfindung gegenüber dem Stand der Technik besteht darin, daß eine wirksame Verhinderung von Wassersteinablagerungen ohne signifikante chemische Veränderung des Wassers und ohne Einsatz von Chemikalien möglich ist.

Der Erfindung liegt die Erkenntnis zugrunde, daß sich der in kalkhaltigem Wasser enthaltene Kalk bevorzugt nur aus dem chemisch gelösten, ionischen Zustand an Fremdkörperoberflächen anlagert und dann die harten, schwer entfernbaren Ablagerungen bzw. Inkrustierungen bildet. Dabei kann sich Kalk nach den Regeln der Thermodynamik aber nur solange ausscheiden, solange er sich im sogenannten übersättigten Zustand befindet. Dies bedeutet, daß sich niemals die gesamte, im Wasser vorhandene Kalkmenge, sondern immer nur der übersättigte Anteil ausscheidet. Aufgrund der kinetischen Hemmung fällt aber Kalk in niedrig übersättigtem Zustand nicht spontan im Wasservolumen aus, sondern lagert sich (energetisch begünstigt) bevorzugt an Fremdkörperoberflächen an, was dann die vorstehend genannten Wassersteinablagerungen, harten schwer entfernbaren Ablagerungen bzw. Inkrustierungen mit den genannten Nachteilen bedingt.

Bei der Erfindung, die eine Weiterentwicklung der aus der EP 1 125 895 bekannten Vorrichtung darstellt, wird nun im kalkhaltigen Wasser durch temporäre, lokale Änderungen des pH-Wertes die kinetische Hämmung der Kristallisation aufgehoben und dadurch die Bildung sogenannter Nanokristalle im Wasservolumen veranlaßt, die aufgrund ihrer großen spezifischen Oberfläche als Impfkristalle für die Bindung des gesamten, im Übersättigungszustand befindlichen Kalks zur Verfügung stehen. Die in der Folge der weiteren Kristallisation gebildeten Kalkkristalle sind über sehr lange Zeit (bis mehrere Tage) im Wasser schwebfähig und besitzen oberflächlich keine ausreichenden Bindungskräfte untereinander oder zu Fremdoberflächen und können so keine harte Ablagerungen bilden. Harte Abscheidungen oder Kalkablagerungen, die zu Störungen in dem wasserführenden System führen könnten, können somit nicht auftreten.

Die Erfindung wird im Folgenden anhand der Figuren an Ausführungsbeispielen näher erläutert. Es zeigen:

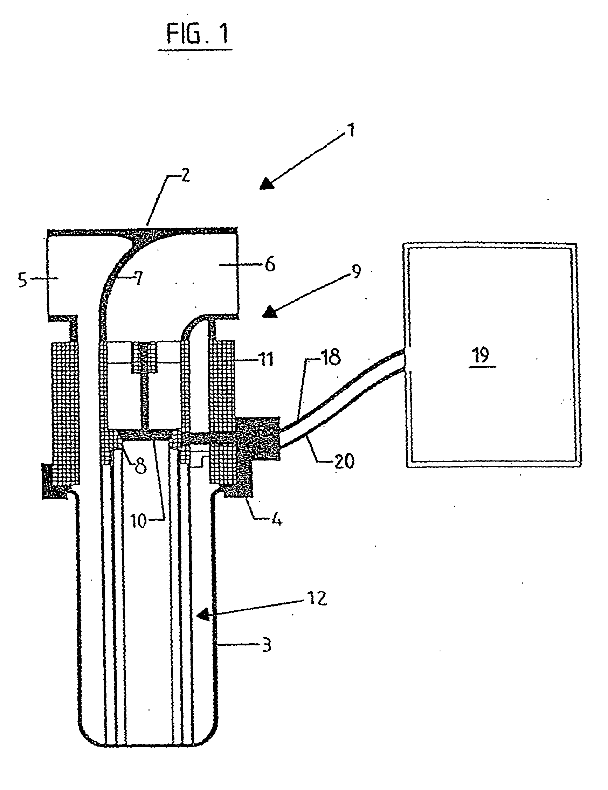

- Fig. 1: in vereinfachter Darstellung einen Schnitt durch eine Vorrichtung gemäß der Erfindung;
- Fig. 2 und 3: einen Längsschnitt bzw. einen Querschnitt durch die Filterelektrode der Elektrodeneinheit der Vorrichtung gemäß Figur 1;
- Fig. 4: in vergrößerter Darstellung drei Schichten der Filterelektrode;
- Fig. 5: eine schematische Darstellung zur Erläuterung der elektrisch leitenden Schichten der Filterelektrode an dem äußeren und inneren Stützring.

Die in den Figuren allgemein mit 1 bezeichnete Vorrichtung zur Verhütung von Wasserstein in wasserführenden Systemen besitzt ein Gehäuse, welches ähnlich den bekannten Gehäusen von Hauswasserfiltern ausgebildet ist, d. h., das Gehäuse besteht im wesentlichen aus einem oberen Gehäuseteil 2 und einem unteren, als langgestreckte, geschlossene Kappe ausgebildeten Gehäuseteil 3, welches mit seiner offenen Seite über eine Verschraubung 4 an dem unteren, offenen Ende des Gehäuseteils 2 dicht befestigt werden kann. Das Gehäuseteil 2 besitzt einen Anschluß 5, der den Wassereinlaß bildet, sowie einen Anschluß 6, der den Wasserauslaß bildet. Das untere Gehäuseteil 3, aber auch das obere Gehäuseteil 2 (im Anschlußbereich mit dem Gehäuse Teil 3) sind kreiszylinderförmig ausgebildet, und zwar konzentrisch zu einer Mittelachse M, die senkrecht zu den Achsen der Anschlüsse 5 und 6 liegt. Die Anschlüsse 5 und 6 sind achsgleich angeordnet.

Im Gehäuseteil 2 ist weiterhin eine von einem rohrförmigen Abschnitt gebildete Wasserführung 7 derart vorgesehen, daß diese Wasserführung oder dieser Kanal 7 einerseits den Anschluß 6 bildet, andererseits aber im Inneren des Gehäuses einen internen Anschluß 8 mit einer Öffnung, die mit ihrer Achse achsgleich mit der Mittelachse M angeordnet ist und in einer Ebene senkrecht zu dieser Mittelachse liegt.

Im Bereich des Anschlusses 8 ist ein Durchflußsensor 9 vorgesehen, der bei der dargestellten Ausführungsform aus einem in der Wasserführung 7 angeordneten und zugleich auch als Rückschlagventil dienenden Sensorelement 10 und aus einer äußeren Spule 11 besteht, deren Induktivität sich in Abhängigkeit von der Lage des Sensorkörpers 10 verändert und die damit ein von der Durchführungsmenge abhängiges Sensorsignal ermöglicht. Die Position des Sensorkörpers 10 ist abhängig von der die Wasserführung 7 durchströmenden Wassermenge.

Unterhalb des Sensorkörpers 10 bzw. des Durchflußmessers 9 ist am Anschluß 8 eine rohrförmige oder hohlzylinderförmige Elektrodeneinheit 12 mit ihrem einen offenen Ende angeschlossen. Das andere Ende der Elektrodeneinheit 12 stützt sich gegen die Innenseite des Bodens des Gehäuseteils 3 ab und ist dort abgedichtet.

Zwischen der Außenfläche der Elektrodeneinheit 12 und der Innenfläche der zylinderförmigen Umfangswende der Gehäuseteile 2 und 3 ist ein Ringkanal 13 gebildet, der mit dem Anschluß 5 in Verbindung steht, so daß vom Anschluß 5 zum Anschluß 6 hin ein Wasserstrom möglich ist, und zwar durch den Ringkanal 13, durch die Wandung der Elektrodeneinheit 12 in das Innere der Elektrodeneinheit und von dort über den Kanal 7 an den Anschluß 6.

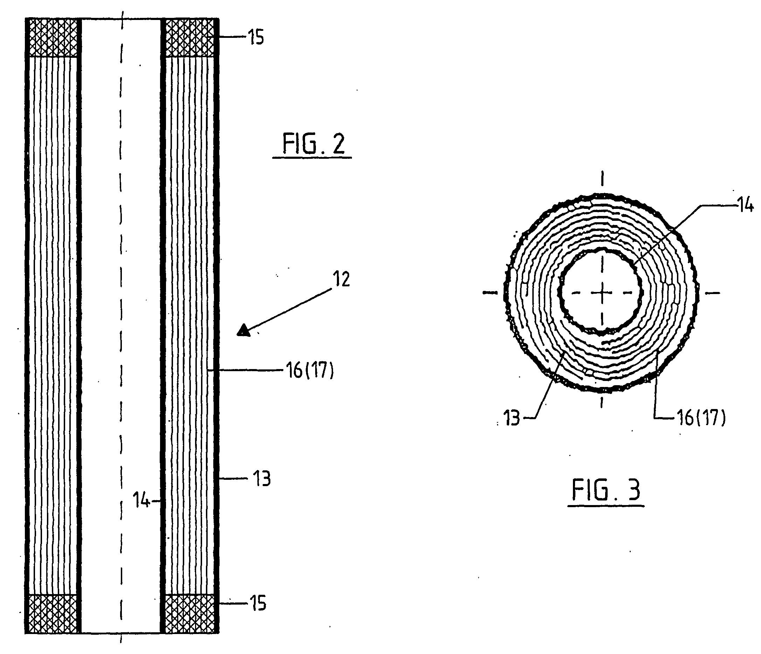

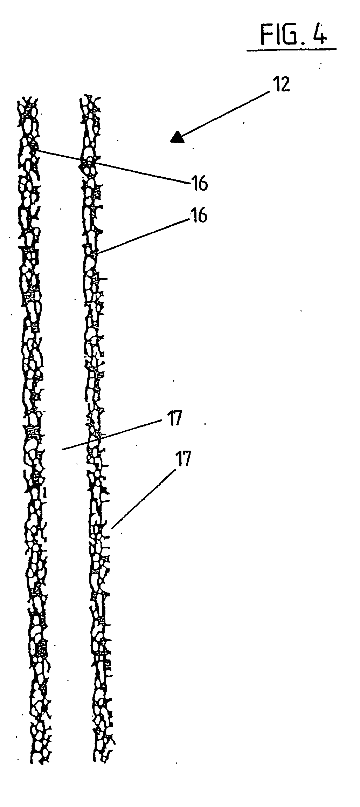

Die Figuren 2 - 5 zeigen im Detail den Aufbau der Elektrodeneinheit 12. Diese besteht u.a. aus dem äußeren Elektrodenelement bzw. Stütz-Zylinder 12 und dem inneren Elektrodenelement bzw. Stütz-Zylinder 13, der konzentrisch von dem äußeren Stütz-Zylinder 14 mit Abstand umschlossen wird. Beide Zylinder sind an dem oberen sowie an dem unteren Ende der Elektrodeneinheit 12 jeweils durch einen ringförmigen Abstandhalter 15 aus einem elektrisch isolierenden Material miteinander verbunden und im erforderlichen Abstand voneinander gehalten.

Die Stütz-Zylinder 13 und 14 bestehen jeweils aus einem elektrisch leitenden Material, beispielsweise aus eine elektrisch leidenden Kunststoff oder aus Metall und sind perforiert ausgebildet. Für die Herstellung der Stütz-Zylinder 13 und 14 eignet sich z.B. ein perforiertes Metallblech, ein Streckmetall oder andere Materialien, beispielsweise Gittermaterialien usw..

Der zwischen den beiden Stütz-Zylindern 13 und 14 gebildete Ringspalt ist der wirksame Raum der Filtereinheit. In diesem Ringspalt sind mehrere Lagen aus einem filterartig wirkenden Material, d.h. aus einem wasserdurchlässigen Flachmaterial angeordnet, und zwar jeweils abwechselnd eine elektrisch leitende Lage 16 und eine elektrisch nicht leitende Lage 17. Die elektrisch leitenden Lagen 16 bestehen beispielsweise aus einem Kohlefaservlies und die elektrisch nicht leitenden Lagen 17 aus einem Kunstfaservlies. Die Lagen sind in geeigneter Weise miteinander verbunden und bilden eine Filterelektrode. Die Lagen sind weiterhin spiralförmig um die gemeinsame Längsachse L der Elektrodeneinheit 12 bzw. der Stütz-Zylinder 13 und 14 im Ringspalt zwischen diesen Zylindern angeordnet, und zwar bei der dargestellten Ausführungsform derart, daß sich jede Lage sprialförmig über einen Winkelbereich von etwa 360° um die Achse L erstreckt.

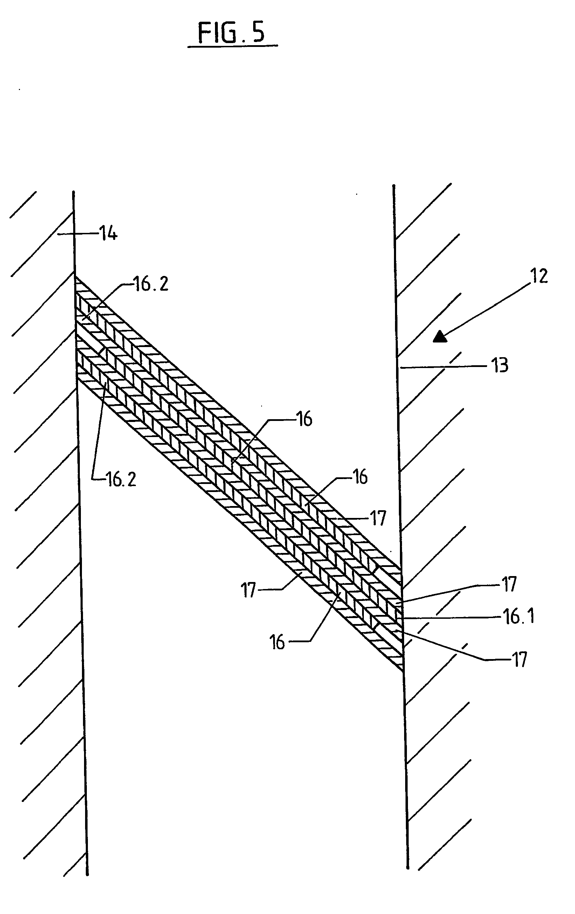

Wie in der Figur 5 schematisch dargestellt ist, reicht jede Lage 17 mit ihren Enden bis an den äußeren Stütz-Zylinder 13 und auch an den inneren Stütz-Zylinder 14 und liegt auf diesen Zylindern jeweils mit einem Randbereich auf. Die elektrisch leitenden Lagen 16 sind so angeordnet, daß jede Lage 16 jeweils nur mit einem Randbereich an einem Stützlyinder 13 oder 14 anliegt, und zwar jeweils abwechselnd eine Lage 16 mit dem äußeren Randbereich 16.1 an dem äußeren Stütz-Zylinder 13 und die nächstfolgende Lage 16 mit ihrem inneren Randbereich 16.2 am inneren Stütz-Zylinder 14 usw.. Durch die Anlage an den Stütz-Zylindern 13 bzw. 14 sind die Lagen 16 jeweils auch elektrisch mit einem der Stütz-Zylinder verbunden und über den jeweiligen Stütz-Zylinder mit einem Kontakt des elektrischen Anschlusses 8.

Die Lagen 16 bilden also die Elektroden der Elektrodeneinheit 12, mit denen das die Elektrodeneinheit 12 bzw. die Lagen 16 und 17 durchströmende Wasser mit dem elektrischen Feld beaufschlagt wird.

Der Durchflußmesser 9 ist über eine Sensorleitung 18 an eine Steuerelektronik 19 angeschlossen, die u.a. auch zur Ansteuerung der Elektrodeneinheit 12 dient und hierfür über eine Vorsorgungsleitung mit den Stütz-Zylindern 13 und 14 und damit mit den die Elektroden bildenden elektrisch leitenden Lagen 16 verbunden ist.

Um ein schnelles Ausstauschen der Elektrodeneinheit zu ermöglichen, ist der Anschluß 8 so ausgebildet, daß nach dem Einsetzen der Elektrodeneinheit 12 an diesem Anschluß zugleich auch die elektrische Verbindung zwischen den wenigstens zwei Leitern der Versorgungsleitung 19 und dem jeweiligen Stütz-Zylinder 13 bzw. 14 hergestellt ist.

Einerseits dient die Elektrodeneinheit 12 als herkömmliches Filter. Die Elektrodeneinheit 12 dient aber insbesondere auch für eine elektrolytische Behandlung des das Gehäuse durchströmenden Wassers in der Weise, daß durch eine bei der Elektrolyse erreichte, d. h. im Bereich der als Kathode wirkenden Elektrode erreichte lokale Änderung des PH-Wertes, die kinetische Hemmung der Kristallisation der im Wasser vorhandenen Kalkmenge aufgehoben wird und es so zur Bildung sogenannter Nanokristalle im Wasservolumen kommt, die dann aufgrund ihrer großen spezifischen Oberfläche als Impfkristalle für die Bindung des gesamten, im Übersättigungszustand befindlichen Kalks zur Verfügung stehen. An diesen Nanokristallen bzw. Impfkristallen erfolgt dann die weitere Kristallisation und dabei die Abscheidung weiterer, im Wasser gelöster Kalkmengen, so daß dem Wasser soviel Kalk entzogen wird, daß sich Kalk nicht an Fremdkörperoberflächen, wie z. B. an Oberflächen wasserführender Rohre, in Boilern usw. ablagern kann. Die durch Kristallisation an den Impfkristallen entstehenden Kristalle sind über Stunden bis zu Tagen im Wasser schwebefähig und besitzen oberflächlich keine ausreichenden Bindungskräfte untereinander oder zu Oberflächen, so daß es zu keinen harten Ablagerungen an Oberflächen oder zu den Wasserfluß störenden Kalkausscheidungen kommen kann.

Die Steuerelektronik 19 liefert für die elektrolytische, lokale Änderung des PH-Wertes, eine Gleichspannung an die Elektrodenelemente oder Stützkörper 13 und 14 und damit an die leitenden Lagen 16 mit unterschiedlicher Polarität, beispielsweise eine Gleichspannung im Niederspannungsbereich zwischen 2 - 24 Volt. Diese Gleichspannung wird beispielsweise in Abhängigkeit von dem vom Durchflußsensor 9 ermittelten Wasser-Durchfluß gesteuert oder geschaltet, beispielsweise getaktet oder in Form von Gleichspannungsimpulsen, deren Anzahl je Zeiteinheit proportional zum Wasserdurchfluß ist. Bei fehlendem Wasserfluß wird die Spannung an der Elektrodeneinheit 12 abgeschaltet.

Grundsätzlich besteht auch die Möglichkeit, die Steuerelektronik 19 so auszubilden, daß die zwischen den Elektrodenelementen 13 und 14 anliegende Spannung sich aus einem Gleichspannungsanteil und aus wenigstens einer überlagerten Wechselspannung und/oder überlagerten Impulsen zusammensetzt. Weiterhin besteht die Möglichkeit, daß die an den Elektrodenelementen 13 und 14 anliegende Spannung bzw. deren Polarität nach einem bestimmten Zeitprogramm geändert wird.

Die vorzugsweise Mikroprozessor gestützte Steuerelektronik ist beispielsweise weiterhin so ausgeführt, daß sie die Spannung zwischen den Elektrodenelementen 13 und 14 bzw. zwischen den elektrisch leitenden Lagen 16 unterschiedlicher Polarität entsprechend vorgegebenen Spannungswerten regelt und/oder konstant hält. Oder aber den an die Elektrodeneinheit fließenden Strom entsprechend vorgegebenen Sollwerten regelt oder konstant hält.

Ist die an der Elektrodeneinheit anliegende Spannung eine Wechselspannung oder eine Impulsspannung, so liegt die Frequenz im mittelfrequenten Bereich.

Wesentliche Vorteile der Vorrichtung 1 bestehen u.a. in geringen Betriebskosten, in einem minimalen Stromverbrauch, in einem in Bezug auf mögliche Folgenschäden risikolosen Betrieb und in einem äußerst geringen Wartungsaufwand, so daß die erfindungsgemäße Vorrichtung bisher auf dem Markt erhältliche Einrichtungen an Effizienz, Ökonomie, ökologischer Verträglichkeit und Produktsicherheit deutlich übertrifft. Ein weiterer wesentlicher Vorteil der Vorrichtung 1 besteht darin, daß durch Entfernen des unteren Gehäuseteils 3 die kartuschenartige Elektrodeneinheit 12 leicht ausgewechselt werden kann und auch evtl. Fremdstoffe, die sich innerhalb der Elektrodeneinheit 12 angelagert haben, entfernt werden können.

Eine ausgetauschte Elektrodeneinheit 12 kann auch problemlos für eine Wiederverwendung aufgearbeitet werden, und zwar beispielsweise durch Austausch des von den Lagen 16 und 17 gebildeten Einsatzes.

Vorstehend wurde davon ausgegangen, daß der Durchflußsensor 9 von einem kolbenartigen Sensorelement gebildet ist. Selbstverständlich ist es auch möglich, andere Durchflußsensoren vorzusehen. Weiterhin wurde vorstehend davon ausgegangen, daß der Wasserzufluß über den Anschluß 5 und der Wasserabfluß über den Anschluß 6 erfolgen. Selbstverständlich ist es auch möglich, die Strömungsrichtung so zu ändern, daß das zu behandelnde Wasser über den Anschluß t zugeführt und das behandelte Wasser über den Anschluß 5 abgeführt wird, so daß das Wasser dann die Eletrodeneinheit 12 radial von innen nach außen durchströmt.

### Bezugszeichenliste

- 1: Vorrichtung
- 2,3: Gehäuseteil
- 4: Verschraubung
- 5,6: Anschluß
- 7: Kanal
- 8: interner Anschluß
- 9: Durchflußsensor
- 10: Sensorelemet
- 11: Spule
- 12: Elektrodeneinheit
- 13, 14: Stütz-Zylinder
- 15: Abstandhalter
- 16, 17: Flachmaterial
- 18: Sensorleitung
- 19: Steuerelektronik
- 20: Versorgungsleitung

## Patentansprüche

1. Vorrichtung zur Verhütung von Wasserstein in wasserführenden Systemen, mit wenigstens einer in einem Reaktionsgefäß oder Gehäuse (2, 3) der Vorrichtung untergebrachten und von Wasser durchströmten Elektrodeneinheit (12), die zwei zylinder- oder rohrförmige, für das Wasser durchlässige Elektrodenelemente aus einem elektrisch leitenden Material besitzt, wobei die ineinander liegend angeordneten Elektrodenelemente (13, 14) zwischen sich einen Ringspalt bilden,
**dadurch gekennzeichnet,**
**daß** im Ringspalt zwischen den Elektrodenelementen (13, 14) wenigstens zwei Lagen (16) aus einem wasserdurchlässigen, aber elektrisch leitenden Flachmaterial vorgesehen sind, wobei eine erste elektrisch leitende Lage (16) mit dem äußeren Elektrodenelement (13) und eine zweite elektrisch leitende Lage (16) mit dem inneren Elektrodenelement (14) elektrisch verbunden ist, und
**daß** zwischen den elektrisch leitenden Lagen (16) jeweils eine diese trennende Zwischenlage (17) aus einem wasserdurchlässigen, elektrisch nicht leitenden Flachmaterial vorgesehen ist.

2. Vorrichtung nach Anspruch 1, **dadurch gekennzeichnet,**
**daß** das äußere und das innere Elektrodenelement (13, 14) konzentrisch zueinander angeordnet sind,
und/oder
**daß** die wenigstens zwei elektrisch leitenden Lagen (16) und die wenigstens eine Zwischenlage (17) spiralförmig in Bezug auf eine Längsachse (L) der Elektrodeneinheit (12) in dem Ringspalt zwischen dem äußeren und den inneren Elektrodenelement (13, 14) vorgesehen sind.

3. Vorrichtung nach einem der vorhergehenden Ansprüche, **dadurch gekennzeichnet,**
**daß** die wenigstens zwei elektrisch leitenden Lagen (16) und die wenigstens eine Zwischenlage (17) die Längsachse (L) auf einem Winkelbereich von wenigstens 360° oder auf einem Winkelbereich von kleiner als 360° umschließen.

4. Vorrichtung nach einem der vorhergehenden Ansprüche, **dadurch gekennzeichnet,**
**daß** die elektrisch leitenden Lagen (16) zur elektrischen Verbindung mit einem Randbereich (16.1, 16.2) gegen das äußere Elektrodenelement (13) oder das innere Elektrodenelement (14) anliegen.

5. Vorrichtung nach einem der vorhergehenden Ansprüche, **dadurch gekennzeichnet,**
**daß** im Ringspalt eine Vielzahl von elektrisch leitenden Lagen (16) und eine Vielzahl von Zwischenlagen (17) vorgesehen sind, und zwar jeweils eine Zwischenlage (17) zwischen zwei elektrisch leitenden Lagen.

6. Vorrichtung nach einem der vorhergehenden Ansprüche, **dadurch gekennzeichnet,**
**daß** die elektrisch leitenden Lagen (16) aus einem elektrisch leitenden Kunststoff-. Flachmaterial oder aus einem Vlies aus einem elektrisch leitenden Material, beispielsweise aus einem Kohlefaservlies bestehen,
und/oder
**daß** die Zwischenlagen (17) aus einem Kunststoff-Flachmaterial, beispielweise aus einer perforierten Kunststoff-Folie und/oder aus einem. Kunstfaservlies bestehen.

7. Vorrichtung nach einem der vorhergehenden Ansprüche, **dadurch gekennzeichnet,**
**daß** die Elektrodenelemente (13, 14) aus einem perforierten, elektrisch leitenden Flachmaterial, beispielsweise aus einem Metallblech, z.B. Edelmetallblech, oder einem elektrisch leitenden Kunststoff-Flachmaterial bestehen,
und/oder
**daß** die Elektrodenelemente (13, 14) aus einem elektrisch leitenden Gittermaterial, beispielsweise aus Metall oder Kunststoff, z.B. aus einem Streckmetall gefertigt sind.

8. Vorrichtung nach einem der vorhergehenden Ansprüche, **gekennzeichnet durch** eine Ansteuerschaltung (19), über die die Elektrodenelemente (13, 14) mit einer Gleichspannung und/oder mit einer gepulsten Gleichspannung und/oder mit einer Wechselspannung und/oder mit einer mit zusätzlichen Impulsen überlagerten Gleichspannung beaufschlagt werden,
wobei beispielsweise die Spannung an den Elektrodenelementen (13, 14) und/oder zwischen elektrisch leitenden Lagen (16) unterschiedlicher Polarität im Bereich zwischen 1 bis 24 Volt liegt.

9. Vorrichtung nach einem der vorhergehenden Ansprüche, **gekennzeichnet durch** einen Einlaß für das zu behandelnde Wasser und einen Auslaß für das behandelte Wasser, wobei zwischen dem Einlaß und dem Auslaß die von dem Wasser durchströmte Elektrodeneinheit (12) derart vorgesehen ist, daß das Wasser diese Elektrodeneinheit von einem das äußere Elektrodenelement (13) umschließenden Raum zu einem von dem inneren Elektrodenelement (14) umschlossenen Raum hin durchströmt.

10. Vorrichtung nach einem der vorhergehenden Ansprüche,
**gekennzeichnet durch** einen Einlaß für das zu behandelnde Wasser und einen Auslaß für das behandelte Wasser, wobei zwischen dem Einlaß und dem Auslaß die von dem Wasser durchströmte Elektrodeneinheit (12) derart vorgesehen ist, daß das Wasser diese Elektrodeneinheit von einem von dem inneren Elektrodenelement (14) umschlossenen Raum zu einem das äußere Elektrodenelement (13) umschließenden Raum hin durchströmt;
und/oder
**gekennzeichnet durch** einen Durchflußsensor zur Messung des Wasserflusses,
wobei der Durchflußsensor die Steuerelektronik zur Ansteuerung der Elektrodenanordnung (12) bei Beendigung des Wasserflusses abschaltet und/oder in Abhängigkeit von der Wasserdurchflußmenge regelt.

## Claims

1. Device for preventing the formation of scale in systems which carry water, with at least one electrode unit (12) which is housed in a reaction vessel or housing (2, 3) of the device and through which water flows and which has two cylindrical or tubular electrode elements of an electrically conductive material permeable to water, wherein the electrode elements (13, 14) which are mounted inside one another form between them an annular gap , **characterised in that** in the annular gap between the electrode elements (13, 14) there are at least two layers (16) of a water-permeable, but electrically conductive flat material wherein a first electrically conductive layer (16) is electrically connected to the outer electrode element (13) and a second electrically conductive layer (16) is connected electrically to the inner electrode element (14), and that between the electrically conductive layers (16) there are intermediate layers (17) which separate same and which are made from a water-permeable electrically non-conductive flat material.

2. Device according to claim 1 **characterised in that** the outer and the inner electrode element (13,14) are arranged concentric with one another, and/or that the at least two electrically conductive layers (16) and the at least one intermediate layer (17) are provided spirally relative to a longitudinal axis (L) of the electrode unit (12) in the annular gap between the outer and the inner electrode elements (13, 14).

3. Device according to one of the preceding claims **characterised in that** the at least two electrically conductive layers (16) and the at least one intermediate layer (17) surround the longitudinal axis (L) over an angular region of at least 360° or over an angular region of less than 360°.

4. Device according to one of the preceding claims **characterised in that** for the electrical connection the electrically conductive layers (16) bear by an edge area (16.1, 16.2) against the outer electrode element (13) or the inner electrode element (14).

5. Device according to one of the preceding claims **characterised in that** a number of electrically conductive layers (16) and a number of intermediate layers (17) are provided in the annular gap, namely one intermediate layer (17) between each two electrically conductive layers.

6. Device according to one of the preceding claims **characterised in that** the electrically conductive layers (16) are made of an electrically conductive plastics flat material or of a fleece of an electrically conductive material, by way of example a carbon fibre fleece, and/or that the intermediate layers (17) are made of a plastics flat material, by way of example of a perforated plastics foil and/or of a synthetic fibre fleece.

7. Device according to one of the preceding claims **characterised in that** the electrode elements (13, 14) are made of a perforated electrically conductive flat material, by way of example a sheet metal plate, e.g. a precious metal plate or of an electrically conductive plastics flat material, and/or that the electrode elements (13, 14) are made from an electrically conductive mesh material, by way of example of metal or plastics, e.g. of a stretched metal.

8. Device according to one of the preceding claims **characterised by** a control circuit (19) through which the electrode elements (13, 14) are charged with a direct current voltage and/or with a pulsating direct current voltage and/or with an alternating current voltage and/or with a direct current voltage superimposed with additional impulses, wherein by way of example the voltage at the electrode elements (13, 14) and/or between the electrically conductive layers (16) of different polarity lies in the range between 1 to 24 volts.

9. Device according to one of the preceding claims **characterised by** an inlet for the water which is to be treated and an outlet for the treated water wherein between the inlet and the outlet there is an electrode unit (12) through which the water flows and which is arranged so that the water flows through this electrode unit from a space surrounding the outer electrode element (13) to a space surrounded by the inner electrode element (14).

10. Device according to one of the preceding claims **characterised by** an inlet for the water to be treated and an outlet for the treated water wherein between the inlet and the outlet there is an electrode unit (12) through which the water flows and which is arranged so that the water flows through this electrode unit from a space surrounded by the inner electrode element (14) to a space surrounding the outer electrode element (13); and/or **characterised by** a through-flow sensor for measuring the water flow wherein the through-flow sensor switches off the control electronics for controlling the electrode assembly (12) at the end of the water flow and/or regulates the control in dependence on the amount of water flowing through..

## Revendications

1. Dispositif permettant d'empêcher l'entartrage dans des systèmes de circulation d'eau, comportant au moins une unité à électrodes (12) placée dans une cuve de réaction ou un boîtier (2, 3) du dispositif et traversée par l'eau, laquelle a deux éléments électrodes de forme cylindrique ou tubulaire, perméable à l'eau, en matériau électriquement conducteur, les éléments électrodes (13, 14) disposés l'un dans l'autre formant entre eux un espace annulaire, **caractérisé en ce qu'**au moins deux couches (16) en matériau plat perméable à l'eau mais électriquement conducteur sont prévues dans l'espace annulaire entre les éléments électrodes (13, 14), une première couche électriquement conductrice (16) étant électriquement connectée à l'élément électrode extérieur (13) et une deuxième couche électriquement conductrice (16) étant électriquement connectée à l'élément électrode intérieur (14), et **en ce qu'**une couche intermédiaire de séparation (17) en matériau plat perméable à l'eau, non électriquement conducteur, est prévue entre les couches électriquement conductrices (16).

2. Dispositif selon la revendication 1, **caractérisé en ce que** l'élément électrode extérieur et l'élément électrode intérieur (13, 14) sont disposés de manière concentrique l'un par rapport à l'autre, et / ou en ce que lesdites au moins deux couches électriquement conductrices (16) et ladite au moins une couche intermédiaire (17) sont prévues en forme de spirale par rapport à un axe longitudinal (L) de l'unité à électrodes (12) dans l'espace annulaire entre l'élément électrode extérieur et l'élément électrode intérieur (13, 14).

3. Dispositif selon l'une des revendications précédentes, **caractérisé en ce que** lesdites au moins deux couches électriquement conductrices (16) et ladite au moins une couche intermédiaire (17) entourent l'axe longitudinal (L) sur un secteur angulaire d'au moins 360° ou sur un secteur angulaire de moins de 360°.

4. Dispositif selon l'une des revendications précédentes, **caractérisé en ce que** les couches électriquement conductrices (16) destinées à la connexion électrique s'applique par une zone du bord (16.1, 16.2) à l'élément électrode extérieur (13) ou à l'élément électrode intérieur (14).

5. Dispositif selon l'une des revendications précédentes, **caractérisé en ce qu'**une pluralité de couches électriquement conductrices (16) et une pluralité de couches intermédiaires (17) sont prévues dans l'espace annulaire et, en fait, à chaque fois une couche intermédiaire (17) entre deux couches électriquement conductrices.

6. Dispositif selon l'une des revendications précédentes, **caractérisé en ce que** les couches électriquement conductrices (16) sont constituées d'un matériau plat synthétique électriquement conducteur ou d'un voile en matériau électriquement conducteur, par exemple d'un voile en fibres de carbone, et / ou **en ce que** les couches intermédiaires (17) sont constituées d'un matériau plat synthétique, par exemple d'un film synthétique perforé et / ou d'un voile en fibres synthétiques.

7. Dispositif selon l'une des revendications précédentes, **caractérisé en ce que** les éléments électrodes (13, 14) sont constitués d'un matériau plat perforé, électriquement conducteur, par exemple d'une tôle métallique, par exemple d'une tôle en métal précieux, ou d'un matériau plat synthétique électriquement conducteur, et / ou **en ce que** les éléments électrodes (13, 14) sont fabriqués dans un treillis électriquement conducteur, par exemple en métal ou en matière synthétique, par exemple en métal déployé.

8. Dispositif selon l'une des revendications précédentes, **caractérisé par** un circuit d'excitation (19) par lequel une tension continue et / ou une tension continue pulsée et / ou une tension alternative et / ou une tension continue à laquelle sont superposées des impulsions supplémentaires est appliquée aux éléments électrodes (13, 14), dans lequel par exemple la tension de polarité différente sur les éléments électrodes (13, 14) et / ou entre les couches électriquement conductrices (16) est comprise entre 1 et 24 volts.

9. Dispositif selon l'une des revendications précédentes, **caractérisé par** une entrée pour l'eau à traiter et une sortie pour l'eau traitée, dans lequel entre l'entrée et la sortie, l'unité à électrodes (12) traversée par l'eau est prévue de telle manière que l'eau traverse cette unité à électrodes d'un espace entourant l'élément électrode extérieur (13) en direction d'un espace entouré par l'élément électrode intérieur (14).

10. Dispositif selon l'une des revendications précédentes, **caractérisé par** une entrée pour l'eau à traiter et une sortie pour l'eau traitée, dans lequel entre l'entrée et la sortie, l'unité à électrodes (12) traversée par l'eau est prévue de telle manière que l'eau traverse cette unité à électrodes d'un espace entouré par l'élément électrode intérieur (14) en direction d'un espace entourant l'élément électrode extérieur (13) et / ou **caractérisé par** un capteur d'écoulement pour mesurer l'écoulement d'eau, dans lequel le capteur d'écoulement met hors circuit l'électronique de commande destinée à exciter le dispositif à électrodes (12) lorsque l'eau ne s'écoule plus et / ou règle l'électronique de commande en fonction de la quantité d'eau qui s'écoule.
